# EUROPÄISCHE PATENTSCHRIFT

(11) **EP 3 895 307 B1**
(45) Veröffentlichungstag und Bekanntmachung des Hinweises auf die Patenterteilung: **28.06.2023**
(21) Anmeldenummer: 19798304.2
(22) Anmeldetag: 06.11.2019
(51) Int. Cl.: H02P 29/68, H02P 29/60, H02P 29/032

(54) **VERFAHREN ZUM BETREIBEN EINER ELEKTRISCHEN MASCHINE UND REGELVORRICHTUNG**
METHOD FOR OPERATING AN ELECTRIC MACHINE AND CONTROL DEVICE
PROCÉDÉ POUR FAIRE FONCTIONNER UNE MACHINE ÉLECTRIQUE ET DISPOSITIF DE RÉGULATION

(30) Priorität: 12.12.2018 DE 102018221491
(43) Veröffentlichungstag der Anmeldung: 20.10.2021
(73) Patentinhaber: Robert Bosch GmbH, 70442 Stuttgart (DE)
(72) Erfinder: GOETTING, Gunther, 70499 Stuttgart (DE); WENZLER, Thomas, 68766 Hockenheim (DE)
(86) Internationale Anmeldenummer: PCT/EP2019/080389
(87) Internationale Veröffentlichungsnummer: WO 2020/120036

(56) Entgegenhaltungen:
- DE-A1-102012 103 022
- DE-A1-102013 201 344
- DE-A1-102016 220 536
- DE-A1-102017 203 656

## Beschreibung

Die vorliegende Erfindung betrifft ein Verfahren zum Betreiben einer elektrischen Maschine und eine Regelvorrichtung zum Durchführen eines solchen Verfahrens.

Elektrische Maschinen, wie beispielsweise permanent erregte Synchronmaschinen, finden in zahlreichen technischen Bereichen Einsatz. Beispielsweise werden solche permanent erregten Synchronmaschinen in Kraftfahrzeugen insbesondere Elektro- und Hybridfahrzeugen aber auch in Kleinantrieben im 12V- oder 48V-Bereich eingesetzt.

### Stand der Technik

Aus der WO 2014/001028 A1 ist ein Verfahren zum Betreiben eines elektrischen Traktionsantriebssystems und eine dazugehörige Steuervorrichtung bekannt.

Der Hintergrund der Erfindung liegt darin, dass bei elektrischen Antrieben bei einer Ungleichbelastung der Schalterzweige bei hohem elektrisch erzeugten Drehmoment und gleichzeitigem Stillstand der Antriebsmaschine der belastete Schalterzweig rasch eine Maximaltemperatur erreicht. Um eine Überhitzung und damit eine Zerstörung der Leistungselektronik zu vermeiden wird die elektrische Maschine abgeregelt, so dass das von der elektrischen Maschine zu Verfügung stehende Drehmoment erheblich reduziert wird. Aus der DE 10 2016 220 536 A1 ist ein ähnliches Verfahren zur Begrenzung der Temperatur in einer elektrischen Maschine und eine Steueranordnung zur Durchführung des Verfahrens bekannt.

Es ist daher eine Aufgabe der vorliegenden Erfindung ein Verfahren und eine Vorrichtung bereitzustellen, mit dem das volle Drehmoment der elektrischen Maschine nutzbar bleibt und es nicht zu einer Zerstörung der Leistungselektronik kommt.

### Offenbarung der Erfindung

Die Aufgabe wird durch ein Verfahren zum Betreiben einer elektrischen Maschine nach Anspruch 1 gelöst. Hinsichtlich einer Vorrichtung zur Durchführung eines solchen Verfahrens wird auf Anspruch 11 verwiesen. Die jeweils rückbezogenen abhängigen Ansprüche geben vorteilhafte Weiterbildungen der Erfindung wieder.

Das Verfahren nach der Erfindung umfasst einen Normalbetrieb und einen Sonderbetrieb in Abhängigkeit eines vorgegebenen Sollwertes, wobei der Normalbetrieb die Schritte des Detektierens eines Betriebszustandes, wobei für den Fall, dass der detektierte Betriebszustand ein Sonderzustand ist der Sonderbetrieb ausgeführt wird, und wobei der Sonderbetrieb die Schritte des Aufmodulierens eines zyklischen Wertes auf den vorgegebenen Sollwert, des Detektierens des Betriebszustandes, wobei für den Fall, dass der Betriebszustand ein Normalzustand ist, der Normalbetrieb ausgeführt wird, umfasst.

Als Betriebszustand im Sinne der Erfindung werden die ein System beschreibenden Zustandsgrößen wie beispielsweise die durch den Inverter eingeprägte Frequenz der Spannung, die Drehfrequenz der elektrischen Maschine, Temperatur oder Drehmoment verstanden, so dass entschieden werden kann, ob diese Größen außerhalb eines definierten Bereiches liegen und somit ein Sonderzustand oder ein Normalzustand festgestellt werden kann. Als Normalzustand wird dabei jeder Betriebszustand verstanden, welcher nicht unter den Sonderzustand fällt.

Unter einem zyklischen Wert im Sinne der Erfindung wird ein sich periodisch ändernder Wert in Form einer beispielsweise Sinusschwingung, Sägezahnschwingung etc. verstanden, der eine Schwingung um den Sollwert verursacht.

Dieses Verfahren hat den Vorteil, dass einzelne Bauteile durch die zyklische Bewegung des Rotors nicht thermisch überbeansprucht und dadurch zerstört werden. Die thermische Belastung einzelner Bauteile kann dadurch reduziert werden. Dadurch kann eine Abregelung der elektrischen Maschine, um die Bauteile vor einer Zerstörung zu schützen, welche zudem eine erhebliche Einschränkung in der Umsetzung des Sollwertes bedeutet, vermieden werden.

In einer bevorzugten Ausführung der Erfindung wird der zyklische Wert derart aufmoduliert, dass sich eine zyklische Bewegung des Rotors der elektrischen Maschine ergibt, welche eine Amplitude aufweist, die größer als 1/6 einer elektrischen Umdrehung ist. Der Rotor der elektrischen Maschine schwingt dabei mit einer Gesamtschwingungsbreite von bevorzugt mehr als 1/3 einer elektrischen Umdrehung. Der Mittelwert dieser Schwingung ist dabei der aktuell vorgegebene Sollwert. Durch einen solchen zyklischen Wert, beziehungsweise eine solche Amplitude, wird eine bessere Verteilung der Verlustleistung auf die Schalterzweige der Endstufen erreicht, so dass eine Zerstörung der Bauteile vermieden werden kann.

Vorzugsweise wird die Frequenz des zyklischen Werts so gewählt, dass diese in der Nähe oder gleich einer Eigenfrequenz des dynamischen Systems, insbesondere bestehend aus einem Maschinenregler, einer Leistungselektronik, der elektrischen Maschine und/oder einem nachfolgenden mechanischen Antriebssystem, ist, so dass die gewünschte Amplitude der zyklischen Bewegung der Rotorlage bei reduzierter Amplitude des zyklischen Werts erreicht wird. Dies hat den Vorteil, dass sich das System aufgrund der Eigenfrequenz leicht aufschaukeln lässt, so dass mit einer geringen Anregung eine hohe Wirkung erzielbar ist.

In einer weiteren bevorzugten Ausführung der Erfindung wird als Sollwert ein Sollmoment verwendet. Alternativ wird als Sollwert ein Sollstrom eines Stromreglers der elektrischen Maschine verwendet. Bei einer weiteren Alternative wird als Sollwert ein Sollwinkel des Rotors der elektrischen Maschine verwendet. Diese Werte können auf einfache Weise gemessen werden, so dass ein Sollwert mit dem Istwert verglichen werden kann und somit eine Abweichung auf einfache Weise feststellbar ist.

Vorteilhafterweise wird das Erreichen des Sonderzustands detektiert, wenn die Drehfrequenz des durch die Leistungselektronik eingeprägten elektrischen

Spannungszeigers kleiner als eine Grenzfrequenz ist und eine Temperatur, ein Phasenstrom und/oder ein resultierendes Drehmoment einen Schwellwert überschreitet. Als Grenzfrequenz im Sinne der Erfindung wird eine durch den Inverter eingeprägte Frequenz der Spannung verstanden, ab welcher es durch einseitige Belastung von Bauteilen zu einer Zerstörung dieser Bauteile kommen kann, wobei ein Erreichen der Grenzfrequenz alleine noch nicht zu einer Zerstörung von Bauteilen führt. Zum Eintreten eines Sonderzustandes muss diese Bedingung daher zusammen mit dem Überschreiten einer Temperatur, einer Temperaturdifferenz, eines Stroms und/oder eines Drehmoments vorliegen. Der Vorteil des Detektierens des Sonderzustands liegt darin, dass eine Zerstörung von Bauteilen vermieden wird.

Bei einer vorteilhaften Weiterbildung wird der Sonderzustand erst ab einer vorbestimmten Zeitdauer der Schwellwertüberschreitung detektiert. Dies bedeutet, dass bei einer kurzzeitigen Überschreitung eines oder mehrerer Schwellwerte kein Sonderzustand detektiert wird. Ein Sonderzustand wird somit erst detektiert, wenn wenigstens eine Schwellwertüberschreitung eine vorbestimmte Zeitdauer anhält. Bei dieser Zeitdauer kann dabei davon ausgegangen werden, dass dies zu einer Erwärmung der Schalterzweige führt. Dadurch wird eine unnötige, für die Schalterzweige unkritische, Detektion eines Sonderzustandes vermieden. Es werden somit lediglich die für die Schalterzweige kritisch werdenden Überschreitungen als Sonderzustand detektiert.

Die Grenzfrequenz wird vorzugsweise abhängig von den thermischen Eigenschaften der Leistungselektronik festgelegt. Dadurch kann die Grenzfrequenz besser an die Leistungselektronik angepasst werden.

In einer bevorzugten Weiterbildung der Erfindung wird das Verlassen des Sonderzustands detektiert, wenn die Drehfrequenz des durch die Leistungselektronik eingeprägten elektrischen Spannungszeigers größer als die Grenzfrequenz ist. Bei einem Verlassen des Sonderzustands fängt der Rotor der elektrischen Maschine wieder an zu rotieren, so dass eine einseitige Belastung und damit eine Zerstörung der Bauteile ausgeschlossen werden kann. Dies wird durch eine Frequenz der durch die Leistungselektronik eingeprägten elektrischen Spannung detektiert, die Größer als die Grenzfrequenz ist.

Die Erfindung umfasst zusätzlich eine Regelvorrichtung zum Betreiben einer elektrischen Maschine, wobei die Regelvorrichtung eingerichtet ist, das erfindungsgemäße Verfahren auszuführen. Die Regelvorrichtung umfasst dabei eine Sollwertvorgebeeinheit, zum Vorgeben eines Sollwertes, einen Signalaufbereiter, zur Regelung der elektrischen Maschine, eine Leistungselektronik, als Stellglied für die elektrische Maschine, eine Betriebszustandsdetektierungs- und Entscheidungseinheit, zum Detektieren eines Betriebszustandes und zum Entscheiden, ob aufgrund des Betriebszustandes der Sonderbetrieb oder der Normalbetrieb durchzuführen ist, und eine Modulationseinheit, zur Aufmodulierung eines zyklischen Werts auf den Sollwert während des Sonderbetriebs. Mit einer solchen Regelvorrichtung können die zu dem Verfahren beschriebenen Vorteile erzielt werden.

In einer bevorzugten Ausführungsform ist die elektrische Maschine eine Synchronmaschine. Der Vorteil einer Synchronmaschine ist, dass sie einen hohen Wirkungsgrad, ein geringes Massenträgheitsmoment und aufgrund der Erregung ohne Schleifringe relativ wartungsarm ist.

Zum Ausführen des erfindungsgemäßen Verfahrens umfasst die Erfindung ein Computerprogrammprodukt mit Programmcodemitteln zur Durchführung des Verfahrens, wenn das Computerprogrammprodukt auf einer Steuereinheit einer Regelvorrichtung oder auf einem computerlesbaren Datenträger gespeichert ist. Darüber hinaus umfasst die Erfindung ein maschinenlesbares Speichermedium, auf dem das Computerprogrammprodukt gespeichert ist.

Ausführungsbeispiele der Erfindung sind in der Zeichnung dargestellt und in der nachfolgenden Beschreibung näher erläutert. Es zeigt:
- Figur 1: Ausführungsbeispiel eines Verfahrens zum Betreiben einer elektrischen Maschine und Regelvorrichtung zum Durchführen des Verfahrens, und
- Figur 2: Diagramm zur Veranschaulichung eines Ausführungsbeispiels des erfindungsgemäßen Verfahrens.

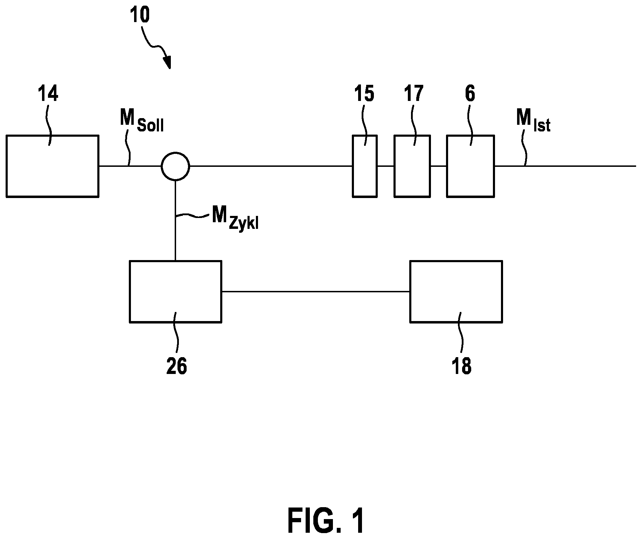

Figur 1 zeigt ein Ausführungsbeispiel eines Verfahrens zum Betreiben einer elektrischen Maschine 6 und eine Regelvorrichtung 10 zum Durchführen des Verfahrens. Die Regelvorrichtung 10 umfasst dabei eine Sollwertvorgebeeinheit 14, die während einem Normalbetrieb ψ_{Normal} den Sollwert, welcher hier beispielsweise ein Sollmoment M_{Soll} ist, an einen Signalaufbereiter 15, bestehend aus einem Maschinenregler, einer Transformation in das rotierende Koordinatensystem, und einer Raumzeigerpulsweitenmodulation besteht, weiterleitet, die das Drehmoment der elektrischen Maschine 6 mit einer Leistungselektronik 17 als Stellglied, auf den Sollwert M_{Soll} einregelt. In einem anderen Ausführungsbeispiel kann der Sollwert ebenso ein Sollstrom eines Stromreglers sein.

Die Regelvorrichtung 10 umfasst zusätzlich eine Betriebszustandsdetektierungs- und Entscheidungseinheit 18, welche einen Betriebszustand M_{Ist} der elektrischen Maschine 6 und der Leistungselektronik 17 detektiert. Die Betriebszustandsdetektierungs- und Entscheidungseinheit 18 ermittelt den aktuellen Betriebszustand des Antriebs, wobei die Zustandsgrößen des Antriebs M_{Ist} bzw. M_{Soll}, die Lage und Drehfrequenz des Rotors, die Temperaturen der Schalter in der Leistungselektronik 17 und ggf. weitere Zustandsgrößen sind. Unterschreitet die Drehfrequenz der durch die Leistungselektronik 17 eingeprägten elektrischen Spannungszeigers eine Grenzfrequenz und überschreitet zusätzlich die Temperatur T_{Grenz} der Schalter der Leistungselektronik 17, ein Strom und/oder ein Drehmoment eine Schwelle, oberhalb einem Schwellwert, so schaltet die Entscheidungseinheit in der Betriebszustandsdetektierungs- und Entscheidungseinheit 18 in einen Sonderbetrieb ψ_{Sonder}.

Während des Sonderbetriebs ψ_{Sonder} moduliert eine Modulationseinheit 26 einen zyklischen Wert M_{Zykl} auf den Sollwert M_{Soll}. Aufgrund von i.d.R. ausreichend ausgeprägten Elastizitäten im Antrieb führen die modulierten Schwankungen des Drehmoments zu zyklischen Bewegungen des Rotors der elektrischen Maschine 6, welche dazu führen, dass die Schaltspiele in der Leistungselektronik 17 gleichmäßiger auf die einzelnen Bauteile verteilt werden. Dadurch wird eine einseitige thermische Belastung der Bauteile reduziert. Der Sonderbetrieb ψ_{Sonder} wird wieder verlassen und es wird wieder der Normalbetrieb ψ_{Normal} ausgeführt, wenn die Entscheidungseinheit in der Betriebszustandsdetektierungs- und Entscheidungseinheit 18 das Signal erhält, dass die elektrische. Drehfrequenz des Rotors oberhalb der Grenzfrequenz liegt.

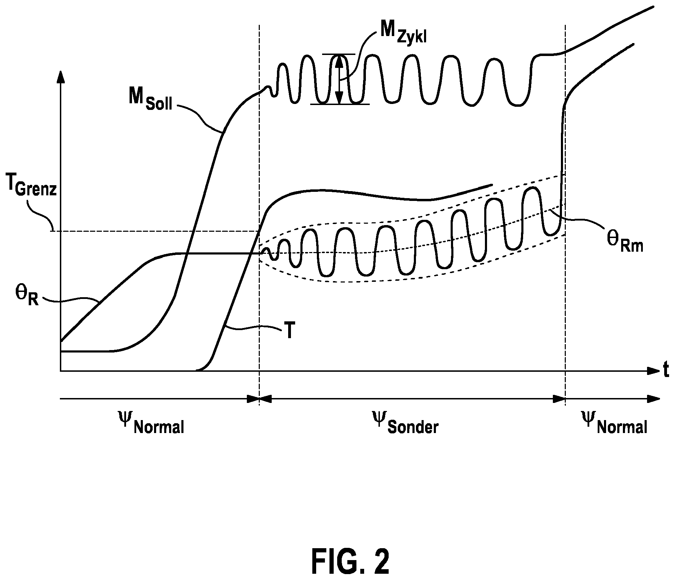

Figur 2 zeigt ein Diagramm zur Veranschaulichung eines Ausführungsbeispiels des erfindungsgemäßen Verfahrens. In diesem Diagramm ist das Sollmoment M_{Soll} über der Zeit t aufgetragen. Zusätzlich ist ein Rotorwinkel Θ_{R} bzw. das Integral der Drehzahl des Rotors über der Zeit t aufgetragen. Aus beiden Kurven ist ersichtlich, dass trotz Anstieg des Sollmoments M_{Soll}, der Rotorwinkel Θ_{R} nach einer anfänglichen Steigung relativ konstant auf einem Niveau verbleibt.

Zusätzlich zeigt das Diagramm, dass eine Temperaturkurve T, welche die Temperatur in mindestens einem der Schalterzweige wiedergibt, über einen Grenzwert T_{Grenz} steigt. Dadurch wird ein Sonderbetrieb ψ_{Sonder} ausgeführt, bei welchem auf den Sollwert M_{Soll} ein zyklischer Wert M_{Zykl} aufmoduliert wird. Dies ist in Figur 2 als Schwingung im Sollwert M_{Soll} und Schwingung im Rotorwinkel Θ_{R} sichtbar. Durch die Schwingung im Rotorwinkel Θ_{R} werden die einzelnen Schalterzweige gleichmäßiger belastet, so dass ein weiterer Temperaturanstieg T, wie in Figur 2 gezeigt, vermieden werden kann. Die Temperatur T hält sich mehr oder weniger auf einem konstant hohen Niveau.

Durch die Zunahme des Fahrerwunschmoments nimmt der mittlere Rotorwinkel Θ_{Rm} stetig zu, was den Übergang in eine Drehbewegung und damit in den Normalbetrieb ψ_{Normal} zur Folge hat. Der in Figur 1 dargestellte Verlauf ist typisch für einen Fahrantrieb eines Elektro- oder Hybridfahrzeugs, welches zunächst eine Zeit lang an einer Steigung stillsteht, wobei der Gleichgewichtszustand durch den elektrischen Antrieb gehalten wird, und dann durch weiteres Drücken auf das Gaspedal ein Anfahrvorgang folgt.

Ein weiteres Beispiel ist ein Stillstand des Fahrzeugs an einem Hindernis, z.B. einem Randstein, bei dem durch Betätigung des Gaspedals die Räder zunächst eine Zeit lang gegen den Randstein drücken und dann durch weiteres Drücken des Gaspedals ein Anfahrvorgang erfolgt, bei dem das Hindernis überwunden wird.

## Patentansprüche

1. Verfahren zum Betreiben einer elektrischen Maschine (6), wobei das Verfahren einen Normalbetrieb (ψ_{Normal}) und einen Sonderbetrieb (ψ_{Sonder}) in Abhängigkeit eines vorgegebenen Sollwertes (M_{Soll}) umfasst, und wobei der Normalbetrieb (ψ_{Normal}) die Schritte umfasst:
- Detektieren eines Betriebszustandes, wobei für den Fall, dass der detektierte Betriebszustand ein Sonderzustand ist der Sonderbetrieb (ψ_{Sonder}) ausgeführt wird,
wobei der Sonderbetrieb (ψ_{Sonder}) die Schritte umfasst:
- Detektieren des Betriebszustandes, wobei für den Fall, dass der Betriebszustand ein Normalzustand ist, der Normalbetrieb (ψ_{Normal}) ausgeführt wird,
**dadurch gekennzeichnet, dass** der Sonderbetrieb (ψ_{Sonder}) den Schritt umfasst:
- Aufmodulieren eines zyklischen Wertes (MZykl) auf den vorgegebenen Sollwert (MSoll).

2. Verfahren zum Betreiben einer elektrischen Maschine (6) nach Anspruch 1, **dadurch gekennzeichnet, dass** der zyklische Wert (M_{Zykl}) derart aufmoduliert wird, dass sich eine zyklische Bewegung des Rotors der elektrischen Maschine (6) ergibt, welche eine Amplitude aufweist, die größer als 1/6 einer elektrischen Umdrehung ist.

3. Verfahren zum Betreiben einer elektrischen Maschine (6) nach Anspruch 1 oder 2, **dadurch gekennzeichnet, dass** die Frequenz des zyklischen Werts (M_{Zykl}) so gewählt wird, dass diese in der Nähe oder gleich einer Eigenfrequenz des dynamischen Systems, insbesondere bestehend aus einem Maschinenregler, einer Leistungselektronik (17), der elektrischen Maschine (6) und/oder einem nachfolgenden mechanischen Antriebssystem, ist, so dass die gewünschte Amplitude der zyklischen Bewegung der Rotorlage bei reduzierter Amplitude des zyklischen Werts (M_{Zykl}) erreicht wird.

4. Verfahren zum Betreiben einer elektrischen Maschine (6) nach einem der vorherigen Ansprüche, **dadurch gekennzeichnet, dass** als Sollwert ein Sollmoment (M_{Soll}) verwendet wird.

5. Verfahren zum Betreiben einer elektrischen Maschine (6) nach einem der Ansprüche 1 bis 3, **dadurch gekennzeichnet, dass** als Sollwert ein Sollstrom eines Stromreglers der elektrischen Maschine (6) verwendet wird.

6. Verfahren zum Betreiben einer elektrischen Maschine (6) nach einem der Ansprüche 1 bis 3, **dadurch gekennzeichnet, dass** als Sollwert ein Sollwinkel des Rotors der elektrischen Maschine (6) verwendet wird.

7. Verfahren zum Betreiben einer elektrischen Maschine (6) nach einem der vorherigen Ansprüche, **dadurch gekennzeichnet, dass** das Erreichen des Sonderzustands detektiert wird, wenn die Drehfrequenz des durch eine Leistungselektronik (17) eingeprägten elektrischen Spannungszeigers kleiner als eine Grenzfrequenz ist, und eine Temperatur (T_{Grenz}), ein Phasenstrom und/oder ein resultierendes Drehmoment einen Schwellwert überschreitet.

8. Verfahren zum Betreiben einer elektrischen Maschine (6) nach Anspruch 7, **dadurch gekennzeichnet, dass** der Sonderzustand erst ab einer vorbestimmten Zeitdauer einer Schwellwertüberschreitung detektiert wird.

9. Verfahren zum Betreiben einer elektrischen Maschine (6) nach Anspruch 7 oder 8, **dadurch gekennzeichnet, dass** die Grenzfrequenz abhängig von den thermischen Eigenschaften der Leistungselektronik (17) festgelegt wird.

10. Verfahren zum Betreiben einer elektrischen Maschine (6) nach einem der Ansprüche 7 bis 9, **dadurch gekennzeichnet, dass** das Verlassen des Sonderzustandes detektiert wird, wenn die Drehfrequenz des durch die Leistungselektronik (17) eingeprägten elektrischen Spannungszeigers größer als die Grenzfrequenz ist.

11. Regelvorrichtung (10) zum Betreiben einer elektrischen Maschine (6), wobei die Regelvorrichtung (10) eingerichtet ist, das Verfahren nach einem der vorherigen Ansprüche auszuführen, umfassend:
- eine Sollwertvorgebeeinheit (14), zum Vorgeben eines Sollwertes (M_{Soll}),
- einen Signalaufbereiter (15), zur Regelung der elektrischen Maschine (6),
- eine Leistungselektronik (17), als Stellglied für die elektrische Maschine (6),
- eine Betriebszustandsdetektierungs- und Entscheidungseinheit (18), zum Detektieren eines Betriebszustandes und zum Entscheiden, ob aufgrund des Betriebszustandes der Sonderbetrieb (ψ_{Sonder}) oder der Normalbetrieb (ψ_{Normal}) durchzuführen ist,
**dadurch gekennzeichnet, dass** die Regelvorrichtung
- eine Modulationseinheit (26) zur Aufmodulierung eines zyklischen Werts (M_{Zykl}) auf den Sollwert (M_{Soll}) während des Sonderbetriebs (ψ_{Sonder}) umfasst.

12. Regelvorrichtung (10) nach Anspruch 11, **dadurch gekennzeichnet, dass** die elektrische Maschine (6) eine Synchronmaschine ist.

13. Computerprogrammprodukt mit Programmcodemitteln zur Durchführung des Verfahrens nach einem der Ansprüche 1 bis 10, wenn das Computerprogrammprodukt auf einer Steuereinheit (14, 15, 18, 26) einer Regelvorrichtung (10) nach einer der Ansprüche 11 oder 12 abläuft.

14. Maschinenlesbares Speichermedium, auf dem das Computerprogrammprodukt nach Anspruch 13 gespeichert ist.

## Claims

1. Method for operating an electric machine (6), wherein the method comprises a normal operating mode (ψ_{Normal}) and a special operating mode (ψ_{Special}) depending on a preset setpoint value (M_{Set}), and wherein the normal operating mode (ψ_{Normal}) comprises the steps of:
- detecting an operating state, wherein, for the case where the detected operating state is a special state, the special operating mode (ψ_{Special}) is implemented,
wherein the special operating mode (ψ_{Special}) comprises the steps of:
- detecting the operating state, wherein, for the case where the operating state is a normal state, the normal operating mode (ψ_{Normal}) is implemented,
**characterized in that** the special operating mode (ψ_{Special}) comprises the step of:
- modulating a cyclical value (M_{Cycl}) onto the preset setpoint value (M_{Set}) .

2. Method for operating an electric machine (6) according to Claim 1, **characterized in that** the cyclical value (M_{Cycl}) is modulated in such a way that a cyclical movement of the rotor of the electric machine (6) results which has an amplitude which is greater than 1/6 of an electrical revolution.

3. Method for operating an electric machine (6) according to Claim 1 or 2, **characterized in that** the frequency of the cyclical value (M_{Cycl}) is selected such that it is in the vicinity of or equal to a natural frequency of the dynamic system, in particular consisting of a machine controller, power electronics (17), the electric machine (6) and/or a downstream mechanical drive system, with the result that the desired amplitude of the cyclical movement of the rotor position is achieved given a reduced amplitude of the cyclical value (M_{Cycl}) .

4. Method for operating an electric machine (6) according to one of the preceding claims, **characterized in that** a setpoint torque (M_{Set}) is used as setpoint value.

5. Method for operating an electric machine (6) according to one of Claims 1 to 3, **characterized in that** a setpoint current of a current controller of the electric machine (6) is used as setpoint value.

6. Method for operating an electric machine (6) according to one of Claims 1 to 3, **characterized in that** a setpoint angle of the rotor of the electric machine (6) is used as setpoint value.

7. Method for operating an electric machine (6) according to one of the preceding claims, **characterized in that** the reaching of the special state is detected when the rotational frequency of the electrical voltage phasor impressed by power electronics (17) is less than a limit frequency, and a temperature (T_{Limit}), a phase current and/or a resultant torque exceeds a threshold value.

8. Method for operating an electric machine (6) according to Claim 7, **characterized in that** the special state is detected only after a predetermined time period during which a threshold value is exceeded.

9. Method for operating an electric machine (6) according to Claim 7 or 8, **characterized in that** the limit frequency is fixed depending on the thermal properties of the power electronics (17).

10. Method for operating an electric machine (6) according to one of Claims 7 to 9, **characterized in that** the leaving of the special state is detected when the rotational frequency of the electrical voltage phasor impressed by the power electronics (17) is greater than the limit frequency.

11. Closed-loop control device (10) for operating an electric machine (6), wherein the closed-loop control device (10) is designed to perform the method according to one of the preceding claims, comprising:
- a setpoint value presetting unit (14), for presetting a setpoint value (M_{Set}),
- a signal conditioner (15), for the closed-loop control of the electric machine (6),
- power electronics (17), as actuating element for the electric machine (6),
- an operating state detection and decision unit (18), for detecting an operating state and for deciding whether, on the basis of the operating state, the special operating mode (ψ_{Special}) or the normal operating mode (ψ_{Normal}) should be implemented,
**characterized in that** the closed-loop control device comprises
- a modulation unit (26), for modulating a cyclical value (M_{Cycl}) onto the setpoint value (M_{Set}) during the special operating mode (ψ_{Special}) .

12. Closed-loop control device (10) according to Claim 11, **characterized in that** the electric machine (6) is a synchronous machine.

13. Computer program product having program code means for performing the method according to one of Claims 1 to 10 when the computer program product is running on a control unit (14, 15, 18, 26) of a closed-loop control device (10) according to either of Claims 11 and 12.

14. Machine-readable storage medium, on which the computer program product according to Claim 13 is stored.

## Revendications

1. Procédé permettant de faire fonctionner une machine électrique (6), dans lequel le procédé comprend un fonctionnement normal (ψ_{Normal}) et un fonctionnement spécial (Ψ_{Sonder}) en fonction d'une valeur de consigne spécifiée (M_{Soll}), et dans lequel le fonctionnement normal (Ψ_{Normal}) comprend les étapes consistant à :
- détecter un état de fonctionnement, dans lequel le fonctionnement spécial (Ψ_{Sonder}) est exécuté dans le cas où l'état de fonctionnement détecté est un état spécial,
dans lequel le fonctionnement spécial (Ψ_{Sonder}) comprend les étapes consistant à :
- détecter l'état de fonctionnement, dans lequel le fonctionnement normal (Ψ_{Normal}) est exécuté dans le cas où l'état de fonctionnement est un état normal,
**caractérisé en ce que** le fonctionnement spécial (Ψ_{Sonder}) comprend l'étape consistant à :
- moduler une valeur cyclique (M_{Zykl}) sur la valeur de consigne spécifiée (M_{Soll}) .

2. Procédé permettant de faire fonctionner une machine électrique (6) selon la revendication 1, **caractérisé en ce que** la valeur cyclique (M_{Zykl}) est modulée de telle sorte qu'il en résulte un mouvement cyclique du rotor de la machine électrique (6) qui présente une amplitude qui est supérieure à 1/6 d'un tour électrique.

3. Procédé permettant de faire fonctionner une machine électrique (6) selon la revendication 1 ou 2, **caractérisé en ce que** la fréquence de la valeur cyclique (M_{Zykl}) est sélectionnée de façon à être proche ou égale à une fréquence de résonance du système dynamique, en particulier composé d'un régulateur de machine, d'une électronique de puissance (17), de la machine électrique (6) et/ou d'un système d'entraînement mécanique consécutif, de sorte que l'amplitude souhaitée du mouvement cyclique de la position de rotor est atteinte à une amplitude réduite de la valeur cyclique (M_{Zykl}) .

4. Procédé permettant de faire fonctionner une machine électrique (6) selon l'une quelconque des revendications précédentes, **caractérisé en ce qu'**un couple de consigne (M_{Soll}) est utilisé comme valeur de consigne.

5. Procédé permettant de faire fonctionner une machine électrique (6) selon l'une quelconque des revendications 1 à 3, **caractérisé en ce qu'**un courant de consigne d'un régulateur de courant de la machine électrique (6) est utilisé comme valeur de consigne.

6. Procédé permettant de faire fonctionner une machine électrique (6) selon l'une quelconque des revendications 1 à 3, **caractérisé en ce qu'**un angle de consigne du rotor de la machine électrique (6) est utilisé comme valeur de consigne.

7. Procédé permettant de faire fonctionner une machine électrique (6) selon l'une quelconque des revendications précédentes, **caractérisé en ce que** l'obtention de l'état spécial est détectée si la fréquence de rotation d'un indicateur de tension électrique, sollicité par une électronique de puissance (17), est inférieure à une fréquence limite, et une température (T_{Grenz}), un courant de phase et/ou un couple résultant dépasse(nt) une valeur seuil.

8. Procédé permettant de faire fonctionner une machine électrique (6) selon la revendication 7, **caractérisé en ce que** l'état spécial n'est détecté qu'à partir d'une durée prédéterminée d'un dépassement de valeur seuil.

9. Procédé permettant de faire fonctionner une machine électrique (6) selon la revendication 7 ou 8, **caractérisé en ce que** la fréquence limite est fixée en fonction des propriétés thermiques de l'électronique de puissance (17).

10. Procédé permettant de faire fonctionner une machine électrique (6) selon l'une quelconque des revendications 7 à 9, **caractérisé en ce que** la sortie de l'état spécial est détectée si la fréquence de rotation de l'indicateur de tension électrique, sollicité par l'électronique de puissance (17), est supérieure à la fréquence limite.

11. Dispositif de régulation (10) permettant de faire fonctionner une machine électrique (6), dans lequel le dispositif de régulation (10) est conçu pour exécuter le procédé selon l'une quelconque des revendications précédentes, comprenant :
- une unité de spécification de valeur de consigne (14) pour spécifier une valeur de consigne (M_{Soll}),
- un conditionneur de signal (15) pour réguler la machine électrique (6),
- une électronique de puissance (17) comme actionneur pour la machine électrique (6),
- une unité de détection d'état de fonctionnement et de décision (18) pour détecter un état de fonctionnement et pour décider si le fonctionnement spécial (Ψ_{Sonder}) ou le fonctionnement normal (Ψ_{Normal}) est à exécuter en raison de l'état de fonctionnement,
**caractérisé en ce que** le dispositif de régulation comprend
- une unité de modulation (26) pour moduler une valeur cyclique (M_{Zykl}) sur la valeur de consigne (M_{Soll}) pendant le fonctionnement spécial (Ψ_{Sonder}) .

12. Dispositif de régulation (10) selon la revendication 11, **caractérisé en ce que** la machine électrique (6) est une machine synchrone.

13. Produit de programme informatique, comprenant des moyens de code programme pour mettre en œuvre le procédé selon l'une quelconque des revendications 1 à 10, lorsque le produit de programme informatique est exécuté sur une unité de commande (14, 15, 18, 26) d'un dispositif de régulation (10) selon l'une quelconque des revendications 11 ou 12.

14. Support de stockage lisible par machine sur lequel est stocké le produit de programme informatique selon la revendication 13.
